# EUROPÄISCHE PATENTSCHRIFT

(11) **EP 1 703 354 B1**
(45) Veröffentlichungstag und Bekanntmachung des Hinweises auf die Patenterteilung: **27.05.2009**
(21) Anmeldenummer: 06002780.2
(22) Anmeldetag: 11.02.2006
(51) Int. Cl.: G05D 16/06

(54) **Gasregelgerät**
Gas regulator
Appareil de régulation de gaz

(30) Priorität: 18.03.2005 DE 102005012634
(43) Veröffentlichungstag der Anmeldung: 20.09.2006
(73) Patentinhaber: Honeywell Technologies Sarl, 1024 Ecublens (CH)
(72) Erfinder: Blaauwwiekel, Piet, 7841EB Sleen (NL)
(74) Vertreter: Sturm, Christoph

(56) Entgegenhaltungen:
- DE-U1- 29 802 433
- FR-A- 1 562 104
- GB-A- 197 496
- GB-A- 358 260
- US-A- 1 956 821

## Beschreibung

Die Erfindung betrifft ein Gasregelgerät nach dem Oberbegriff des Anspruchs 1.

Aufgrund sicherheitstechnischer Anforderungen müssen Gasregelgeräte zwei in Serie bzw. in Reihe geschaltete Gasventile aufweisen. Aus dem Stand der Technik bekannte Gasregelgeräte verfügen hierzu über ein einziges Gehäuse, in welches die beiden Gasventile integriert sind. An dem gemeinsamen Gehäuse beider Gasventile können Aktuatoren angreifen, um Ventilteller der Gasventile zu betätigen. Der aus dem Stand der Technik bekannte Aufbau von Gasregelgeräten, bei welchen zwei in Serie geschaltete .Gasventile in ein gemeinsames Gehäuse integriert sind, erfordert einen komplexen sowie relativ teuren Aufbau von Gasregelgeräten.

Ein Gasregelgerät mit den Merkmalen des Oberbegriffs gemäß Anspruch 1 ist aus der GB-A-197,496 bekannt.

Hiervon ausgehend liegt der vorliegenden Erfindung das Problem zu Grunde, ein neuartiges Gasregelgerät zu schaffen. Dieses Problem wird durch ein Gasregelgerät mit den Merkmalen des Anspruchs 1 gelöst. Erfindungsgemäß sind die beiden Ventilmodule im Bereich ihrer Gehäuse an einander korrespondierenden, ersten Gehäuseabschnitten derart miteinander verbunden sind, dass der jeweilige erste Gehäuseabschnitt für das erste Ventilmodul einen Gasausgang und für das zweite Ventilmodul einen Gaseingang bildet, dass die Ventilsitze der beiden Ventilmodule auf einer sich durch die ersten Gehäuseabschnitte erstreckenden Achse liegen, und dass die beiden Ventilmodule um diese Achse beliebig zueinander ausrichtbar sind, derart, dass nach dem Verbinden der beiden Ventilmodule zweite Gehäuseabschnitte, die bei dem ersten Ventilmodul als Gaseingang und bei dem zweiten Ventilmodul als Gasausgang verwendet werden, einen Winkel zwischen 0° und 360° einschließen.

Das erfindungsgemäße Gasregelgerät verfügt über zwei Ventilmodule, die in Serie hintereinander angeordnet sind, wobei jedes der Ventilmodule ein separates Gehäuse aufweist. Die Ventilmodule sind im Bereich ihrer Gehäuse miteinander verbunden, und zwar aneinander korrespondierenden Gehäuseabschnitten. Weiterhin verfügt jedes Ventilmodul über einen Ventilteller sowie zwei Ventilsitze, wobei einer der beiden Ventilsitze mit dem Ventilteller zusammenwirkt. Das erfindungsgemäße Gasregelgerät zeichnet sich durch einen einfachen und kompakten Aufbau aus und ist gegenüber aus dem Stand der Technik bekannten Gasregelgeräten kostengünstiger herstellbar.

Vorzugsweise weisen die beiden miteinander verbundenen Ventilmodule nahezu identische Gehäuse mit einem Gaseingang und einen Gasausgang auf, wobei der Gehäuseabschnitt, der bei dem ersten Ventilmodul als Gasausgang verwendet wird, bei dem zweiten Ventilmodul als Gaseingang verwendet wird.

Nach einer vorteilhaften Weiterbildung der Erfindung weisen die Gehäuse der Ventilmodule Gehäuseabschnitte auf, die von beiden Seiten jeweils einen Ventilsitz bilden, wobei die Ventilteller der Module mit jeweils einem der beiden Ventilsitze derart zusammenwirken, dass bei den beiden unmittelbar aufeinanderfolgenden und miteinander verbundenen Ventilmodulen jeweils unterschiedliche Ventilsitze der entsprechenden Gehäuseabschnitte mit den jeweiligen Ventiltellern zusammenwirken.

Die Gehäuse der Ventilmodule sind nach einer ersten Alternative entweder komplett identisch ausgebildet, oder die Gehäuse der Ventilmodule sind nach einer zweiten Alternative bis auf die Gehäuseabschnitte, an welchen zwei unmittelbar aufeinanderfolgende Ventilmodule zu verbinden sind, identisch ausgebildet sind, wobei nach der zweiten Alternative ein erstes Ventilmodul an diesem Gehäuseabschnitt steckerartig und ein zweites Ventilmodul an diesem Gehäuseabschnitt buchsenartig ausgebildet ist.

Bevorzugte Weiterbildungen der Erfindung ergeben sich aus den Unteransprüchen und der nachfolgenden Beschreibung. Nachfolgend werden Ausführungsbeispiele der Erfindung, ohne hierauf beschränkt zu sein, anhand der Zeichnung näher erläutert. In der Zeichnung zeigt:
- Fig. 1:: eine schematisierte Darstellung eines Gehäuses eines Ventilmoduls eines erfindungsgemäßen Gasregelgeräts;
- Fig. 2:: eine schematisierte Darstellung eines erfindungsgemäßen Gasregelgeräts in geschlossener Position;
- Fig. 3:: eine schematisierte Darstellung eines erfindungsgemäßen Gasregelgeräts in geöffneter Position; und
- Fig. 4:: ein Detail von Gehäusen zweier verbundener Ventilmodule eines alternativen, erfindungsgemäßen Gasregelgeräts.

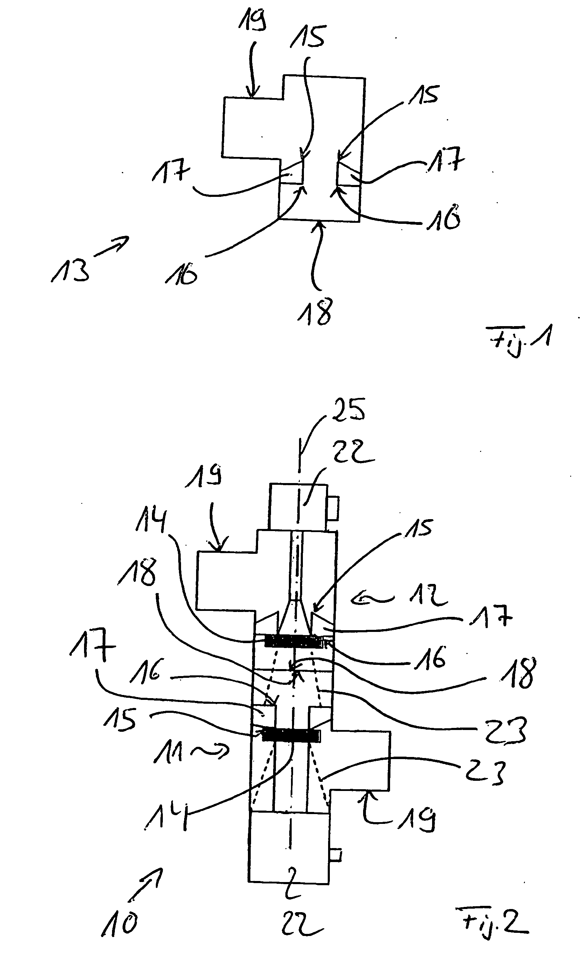

Nachfolgend wird die hier vorliegende Erfindung unter Bezugnahme auf Fig. 1 bis 4 in größerem Detail beschrieben.

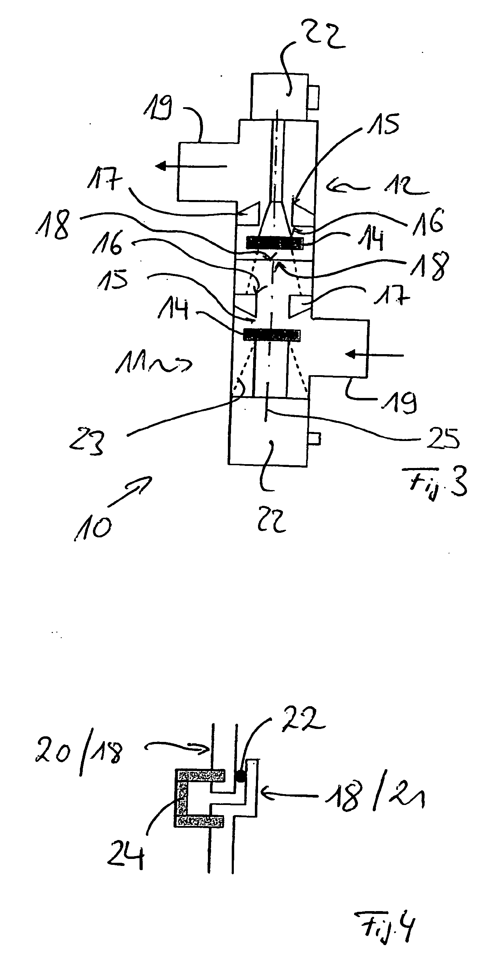

Fig. 2 und 3 zeigen schematisierte Darstellungen eines erfindungsgemäßen Gasregelgeräts 10, wobei Fig. 2 das Gasregelgerät 10 in einer geschlossenen Position und Fig. 3 das Gasregelgerät 10 in einer geöffneten Position zeigt.

Das erfindungsgemäße Gasregelgerät 10 verfügt im gezeigten Ausführungsbeispiel über zwei Ventilmodule 11 und 12. Jedes Ventilmodul 11 und 12 verfügt über ein separates Gehäuse 13. Fig. 1 zeigt ein derartiges Gehäuse 13 in AIleindarstellung. Die Gehäuse 13 der miteinander verbundenen Ventilmodule 11 und 12 sind identisch ausgeführt. Neben den Gehäusen 13 verfügt jedes der Ventilmodule 11 und 12 weiterhin über einen Ventilteller 14 sowie zwei Ventilsitze 15 und 16. Die Ventilsitze 15 und 16 werden von Gehäuseabschnitten 17 gebildet, wobei auf jeder Seite der Gehäuseabschnitte 17 einer der beiden Ventilsitze 15 bzw. 16 ausgebildet ist. Der Ventilteller 14 eines Ventilmoduls 11 wirkt mit einem der beiden Ventilsitze 15 bzw. 16 zusammen.

Wie bereits erwähnt, ist das erfindungsgemäße Gasregelgerät 10 der Fig. 1 aus zwei identischen Ventilmodulen 11 und 12 zusammengesetzt, wobei die Ventilmodule 11 und 12 im Bereich ihrer Gehäuse 13 an korrespondierenden Gehäuseabschnitten 18 miteinander verbunden sind. Der Gehäuseabschnitt 18 dient beim Ventilmodul 11 als Gasausgang und beim sich unmittelbar anschließenden Ventilmodul 12 als Gaseingang. Es liegt demnach im Sinne der hier vorliegenden Erfindung, Gehäuseabschnitte 18 von identisch ausgeführten Gehäusen 13 der Ventilmodule 11 und 12 entweder als Gaseingang oder als Gasausgang zu verwenden. Gleiches gilt für Gehäuseabschnitte 19, die an beiden Ventilmodulen 11 und 12 identisch vorhanden sind, jedoch am Ventilmodul 11 als Gaseingang sowie am Ventilmodul 12 als Gasausgang Verwendung finden.

Die beiden Ventilmodule 11 und 12 sind um eine Achse 25, die sich durch die Ventilsitze 15 und 16 erstreckt, beliebig zueinander verdrehbar bzw. ausrichtbar, und zwar derart, dass nach dem Verbinden der beiden Ventilmodule 11 und 12 an den sich gegenüberliegenden Gehäuseabschnitten 18 die Gehäuseabschnitte 19, die bei dem ersten Ventilmodul 11 als Gaseingang und bei dem zweiten Ventilmodul 12 als Gasausgang verwendet werden, einen Winkel zwischen 0° und 360° einschließen.

Das Gasregelgerät 10 der Fig. 2 und 3 verfügt demnach über zwei Ventilmodule 11 und 12, wobei jedes der Ventilmodule 11 und 12 ein identisches Gehäuse 13 aufweist. Gehäuseabschnitte 18 und 19, die bei einem der Ventilmodule als Gaseingang bzw. Gasausgang dienen, dienen am anderen Ventilmodul als Gasausgang bzw. Gaseingang. So dient, wie bereits erwähnt, beim Ventilmodul 11 der Gehäuseabschnitt 19 als Gaseingang und der Gehäuseabschnitt 18 als Gasausgang. Am Ventilmodul 12 hingegen, welches sich stromabwärts des Ventil moduls 11 unmittelbar an das Ventilmodul 11 anschließt, dient der Gehäuseabschnitt 18 als Gaseingang und der Gehäuseabschnitt 19 als Gasausgang. An den Gehäuseabschnitten 18 sind die beiden aneinandergrenzenden Ventilmodule 11 und 12 miteinander verbunden.

Jedes der Gehäuse 13 der beiden Ventilmodule 11 und 12 verfügt über identische Gehäuseabschnitte 17, die jeweils zwei Ventilsitze 15 und 16 bilden. Im Ventilmodul 11 wirkt der Ventilteller 14 mit dem Ventilsitz 15 und im Ventilmodul 12 wirkt der Ventilteller 14 mit dem Ventilsitz 16 zusammen. Im Bereich von unmittelbar aufeinanderfolgenden Ventilmodulen wirken demnach unterschiedliche Ventilsitze der entsprechenden Gehäuseabschnitte 17 mit den jeweiligen Ventiltellern 14 zusammen.

Gemäß Fig. 1 sind die Gehäuse 13 der beiden Ventilmodule 11 und 12 im Bereich aller Gehäuseabschnitte identisch ausgeführt. Dies ist die im Hinblick auf Investitionskosten sowie Produktionskosten kostengünstigste Variante.

Nach einer Alternative der hier vorliegenden Erfindung sind die Gehäuse 13 der Ventilmodule 11 und 12 bis auf die Gehäuseabschnitte 18, an welchen die aneinandergrenzenden Ventilmodule 11 und 12 miteinander zu verbinden sind, identisch ausgeführt. Diese Alternative zeigt Fig. 4, wobei gemäß Fig. 4 ein Gehäuseabschnitt 18 eines Ventilmoduls als Steckerteil 20 und das korrespondierende Gehäuseteil 18 des sich anschließenden Ventilmoduls als Buchsenteil 21 ausgeführt ist.

In diesem Fall ist es dann möglich, zwischen den beiden Gehäuseabschnitten 18 ein zusätzliches Dichtungselement 22 zu positionieren. Die Variante der Fig. 4 ist zwar etwas teurer, die Dichtung zwischen miteinander zu verbindenden Modulen 11 und 12 kann jedoch robuster realisiert werden.

Die Verbindung der miteinander zu verbindenden Ventilmodule 11 und 12 kann dadurch erfolgen, dass die Ventilmodule 11 und 12 im Bereich ihrer Gehäuse 13, nämlich im Bereich ihrer aneinandergrenzenden Gehäuseabschnitte 18, miteinander verschraubt werden. Alternativ ist es auch möglich, die Ventilmodule 11 und 12 im Bereich der aneinandergrenzenden Gehäuseabschnitte 18 über Clips 24 bzw. Clipverbindungen miteinander zu verbinden.

Fig. 2 und 3 kann entnommen werden, dass die Ventilteller 14 der Ventilmodule 11 und 12 über Aktuatoren 22 betätigbar sind, wobei die Aktuatoren 22 an den Gehäusen 13 der Ventilmodule 11 und 12 befestigt sind. Die Befestigung der Aktuatoren 22 kann wiederum über Schraubverbindungen oder Clipverbindungen erfolgen. Auch ist eine Variante vorstellbar, in welcher ein einziger Clip das gesamte Gasregelgerät 10 umfasst und so sowohl die Aktuatoren 22 an den Gehäusen 13 der Ventilmodule 11 und 12 als auch die beiden Ventilmodule 11 und 12 miteinander verbindet. Die Aktuatoren 22, welche der Betätigung der Ventilteller 14 dienen, können als Schrittmotoren sowie als schaltende oder modulierende Magnetspulen ausgeführt sein. Die Auswahl geeigneter Aktuatoren 22 obliegt dem hier angesprochenen Fachmann und hängt von der gewünschten Funktionalität ab.

Der Vollständigkeit halber sei noch darauf hingewiesen, dass das Öffnen der jeweiligen Ventilmodule 11 und 12 bzw. das Abheben der Ventilteller 14 von den jeweiligen Ventilsitzen 15 und 16 entgegen einer Federkraft erfolgt, die von mit den Ventiltellern 14 zusammenwirkenden Federelementen 23 bereitgestellt wird. Fig. 2 und 3 zeigen die Federelemente 23 stark schematisiert.

### Bezugszeichenliste

- 10: Gasregelgerät
- 11: Ventilmodul
- 12: Ventilmodul
- 13: Gehäuse
- 14: Ventilteller
- 15: Ventilsitz
- 16: Ventilsitz
- 17: Gehäuseabschnitt
- 18: Gehäuseabschnitt
- 19: Gehäuseabschnitt
- 20: Steckerteil
- 21: Buchsenteil
- 22: Aktuator
- 23: Federelement
- 24: Clip
- 25: Achse

## Patentansprüche

1. Gasregelgerät mit zwei in Serie geschalteten Gasventilen, mit einem einem modulartigen Aufbau aus zwei Ventilmodulen (11, 12), wobei jedes Ventilmodul (11, 12) ein Gehäuse (13), zwei Ventilsitze (15, 16) und einen mit einem der beiden Ventilsitze (15, 16) zusammenwirkenden Ventilteller (14) umfasst, und wobei die beiden Ventilmodule (11, 12) miteinander verbunden, **dadurch gekennzeichnet, dass** die beiden Ventilmodule (11, 12) im Bereich ihrer Gehäuse (13) an einander korrespondierenden, ersten Gehäuseabschnitten (18) derart miteinander verbunden sind, dass der jeweilige erste Gehäuseabschnitt (18) für das erste Ventilmodul (11) einen Gasausgang und für das zweite Ventilmodul (12) einen Gaseingang bildet, dass die Ventilsitze (15, 16) der beiden Ventilmodule (11, 12) auf einer sich durch die ersten Gehäuseabschnitte (18) erstreckenden Achse (25) liegen, und dass die beiden Ventilmodule (11, 12) um die Achse (25) beliebig zueinander verdrehbar bzw. ausrichtbar sind, derart, dass nach dem Verbinden der beiden Ventilmodule (11, 12) zweite Gehäuseabschnitte (19), die bei dem ersten Ventilmodul (11) als Gaseingang und bei dem zweiten Ventilmodul (12) als Gasausgang verwendet werden, einen Winkel zwischen 0° und 360° einschließen.

2. Gasregelgerät nach Anspruch 1, **dadurch gekennzeichnet, dass** die beide miteinander verbundenen Ventilmodule (11, 12) nahezu identische Gehäuse (13) mit einem Gaseingang und einem Gasausgang aufweisen, wobei der Gehäuseabschnitt (18), der bei dem ersten Ventilmodul (11) als Gasausgang verwendet wird, bei dem zweiten Ventilmodul (12) als Gaseingang verwendet wird.

3. Gasregelgerät nach Anspruch 1 oder 2, **dadurch gekennzeichnet, dass** die Gehäuse (13) der Ventilmodule (11, 12) Gehäuseabschnitte (17) aufweisen, die von beiden Seiten jeweils einen Ventilsitz (15, 16) bilden, wobei die Ventilteller (14) der Module (11, 12) mit jeweils einem der beiden Ventilsitze (15, 16) zusammenwirken.

4. Gasregelgerät nach Anspruch 3, **dadurch gekennzeichnet, dass** bei den beiden miteinander verbundenen Ventilmodulen (11, 12) jeweils unterschiedliche Ventilsitze (15, 16) der entsprechenden Gehäuseabschnitte (17) mit dem jeweiligen Ventilteller (14) zusammenwirken.

5. Gasregelgerät nach einem der Ansprüche 1 bis 4, **dadurch gekennzeichnet, dass** die beiden Ventilmodule (11, 12) im Bereich ihrer korrespondierenden Gehäuseabschnitte (18) durch Verschrauben miteinander verbunden sind.

6. Gasregelgerät nach einem der Ansprüche 1 bis 4, **dadurch gekennzeichnet, dass** die beiden Ventilmodule (11, 12) im Bereich ihrer korrespondierenden Gehäuseabschnitte (18) durch mindestens einen Clip (24) miteinander verbunden sind.

7. Gasregelgerät nach einem der Ansprüche 1 bis 6, **dadurch gekennzeichnet, dass** die Gehäuse (13) der Ventilmodule (11, 12) Gehäuseabschnitte zur Anbindung eines Aktuators (22) aufweise, welcher der Betätigung des jeweiligen Ventiltellers (14) dient.

8. Gasregelgerät nach einem der Ansprüche 1 bis 7, **dadurch gekennzeichnet, dass** die Gehäuse (13) der Ventilmodule (11, 12) komplett identisch ausgebildet sind.

9. Gasregelgerät nach einem der Ansprüche 1 bis 8, **dadurch gekennzeichnet, dass** die Gehäuse (13) der Ventilmodule (11, 12) bis auf die Gehäuseabschnitte (18), an welchen zwei unmittelbar aufeinanderfolgende Ventilmodule miteinander zu verbinden sind, identisch ausgebildet sind.

10. Gasregelgerät nach Anspruch 9, **dadurch gekennzeichnet, dass** eines der Ventilmodule an diesem Gehäuseabschnitt (18) steckerartig und das andere Ventilmodul an diesem Gehäuseabschnitt (18) buchsenartig ausgebildet ist.

## Claims

1. Gas-regulating apparatus with two gas valves connected in series, with a module-like set-up consisting of two valve modules (11, 12), each valve module (11, 12) comprising a housing (13), two valve seats (15, 16) and a valve disc (14) cooperating with one of the two valve seats (15, 16), and the two valve modules (11, 12) being connected to one another, **characterized in that** the two valve modules (11, 12) are connected to one another in the region of their housings (13), at mutually corresponding first housing portions (18), in such a way that the respective first housing portion (18) forms a gas outlet for the first valve module (11) and a gas inlet for the second valve module (12), **in that** the valve seats (15, 16) of the two valve modules (11, 12) lie on an axis (25) extending through the first housing portions (18), and **in that** the two valve modules (11, 12) are rotatable or alignable with respect to one another, as desired, about the axis (25), in such a way that, after the connection of the two valve modules (11, 12), second housing portions (19), which are used on the first valve module (11) as a gas inlet and on the second valve module (12) as a gas outlet, form an angle of between 0° and 360°.

2. Gas-regulating apparatus according to Claim 1, **characterized in that** the two valve modules (11, 12) connected to one another have virtually identical housings (13) with a gas inlet and with a gas outlet, the housing portion (18), which is used on the first valve module (11) as a gas outlet, being used on the second valve module (12) as a gas inlet.

3. Gas-regulating apparatus according to Claim 1 or 2, **characterized in that** the housings (13) of the valve modules (11, 12) have housing portions (17) which form a valve seat (15, 16) from each of the two sides, the valve discs (14) of the modules (11, 12) cooperating in each case with one of the two valve seats (15, 16).

4. Gas-regulating apparatus according to Claim 3, **characterized in that**, with the two valve modules (11, 12) connected to one another, in each case different valve seats (15, 16) of the corresponding housing portions (17) cooperate with the respective valve disc (14).

5. Gas-regulating apparatus according to one of Claims 1 to 4, **characterized in that** the two valve modules (11, 12) are connected to one another in the region of their corresponding housing portions (18) by screwing.

6. Gas-regulating apparatus according to one of Claims 1 to 4, **characterized in that** the two valve modules (11, 12) are connected to one another in the region of their corresponding housing portions (18) by means of at least one clip (24).

7. Gas-regulating apparatus according to one of Claims 1 to 6, **characterized in that** the housings (13) of the valve modules (11, 12) have housing portions for the tie-up of an actuator (22) which serves for actuating the respective valve disc (14).

8. Gas-regulating apparatus according to one of Claims 1 to 7, **characterized in that** the housings (13) of the valve modules (11, 12) are of completely identical design.

9. Gas-regulating apparatus according to one of Claims 1 to 8, **characterized in that** the housings (13) of the valve modules (11, 12) are designed identically with the exception of the housing portions (18) at which two directly successive valve modules are to be connected to one another.

10. Gas-regulating apparatus according to Claim 9, **characterized in that** one of the valve modules has a plug-like design at this housing portion (18), and the other valve module has a socket-like design at this housing portion (18).

## Revendications

1. Appareil de régulation de gaz comprenant deux soupapes de gaz montées en série, avec une structure modulaire constituée de deux modules de soupape (11, 12), chaque module de soupape (11, 12) comprenant un boîtier (13), deux sièges de soupape (15, 16) et un disque de soupape (14) coopérant avec l'un des deux sièges de soupape (15, 16), les deux modules de soupape (11, 12) étant connectés l'un à l'autre, **caractérisé en ce que** les deux modules de soupape (11, 12) sont connectés l'un à l'autre dans la région de leur boîtier (13) au niveau de premières portions de boîtier (18) se correspondant mutuellement, de telle sorte que la première portion de boîtier (18) respective pour le premier module de soupape (11) forme une sortie de gaz, et celle pour le deuxième module de soupape (12) forme une entrée de gaz, que les sièges de soupape (15, 16) des deux modules de soupape (11, 12) se situent sur un axe (25) s'étendant à travers les premières portions de boîtier (18), et que les deux modules de soupape (11, 12) puissent tourner ou être orientés l'un par rapport à l'autre de manière quelconque autour de l'axe (25), de telle sorte qu'après la connexion des deux modules de soupape (11, 12), des deuxièmes portions de boîtier (19), qui sont utilisées pour le premier module de soupape (11) comme entrée de gaz et pour le deuxième module de soupape (12) comme sortie de gaz, forment un angle compris entre 0° et 360°.

2. Appareil de régulation de gaz selon la revendication 1, **caractérisé en ce que** les deux modules de soupape (11, 12) connectés l'un à l'autre présentent des boîtiers (13) pratiquement identiques avec une entrée de gaz et une sortie de gaz, la portion de boîtier (18) qui est utilisée comme sortie de gaz pour le premier module de soupape (11) étant utilisée comme entrée de gaz pour le deuxième module de soupape (12).

3. Appareil de régulation de gaz selon la revendication 1 ou 2, **caractérisé en ce que** les boîtiers (13) des modules de soupape (11, 12) présentent des portions de boîtier (17) qui forment depuis les deux côtés à chaque fois un siège de soupape (15, 16), les disques de soupape (14) des modules (11, 12) coopérant à chaque fois avec l'un des deux sièges de soupape (15, 16).

4. Appareil de régulation de gaz selon la revendication 3, **caractérisé en ce que** dans le cas des deux modules de soupape (11, 12) coopérant l'un avec l'autre, à chaque fois des sièges de soupape différents (15, 16) des portions de boîtier correspondantes (17) coopèrent avec le disque de soupape respectif (14).

5. Appareil de régulation de gaz selon l'une quelconque des revendications 1 à 4, **caractérisé en ce que** les deux modules de soupape (11, 12) sont connectés l'un à l'autre par vissage dans la région de leurs portions de boîtier (18) correspondantes.

6. Appareil de régulation de gaz selon l'une quelconque des revendications 1 à 4, **caractérisé en ce que** les deux modules de soupape (11, 12) sont connectés l'un à l'autre dans la région de leurs portions de boîtier correspondantes (18) par au moins une pince (24).

7. Appareil de régulation de gaz selon l'une quelconque des revendications 1 à 6, **caractérisé en ce que** les boîtiers (13) des modules de soupape (11, 12) présentent des portions de boîtier pour le raccordement à un actionneur (22), qui sert à l'actionnement du disque de soupape respectif (14).

8. Appareil de régulation de gaz selon l'une quelconque des revendications 1 à 7, **caractérisé en ce que** les boîtiers (13) des modules de soupape (11, 12) sont réalisés sous forme totalement identique.

9. Appareil de régulation de gaz selon l'une quelconque des revendications 1 à 8, **caractérisé en ce que** les boîtiers (13) des modules de soupape (11, 12), à l'exception des portions de boîtier (18) au niveau desquelles on doit raccorder l'un à l'autre deux modules de soupape immédiatement successifs, sont réalisés de manière identique.

10. Appareil de régulation de gaz selon la revendication 9, **caractérisé en ce que** l'un des modules de soupape est réalisé au niveau de cette portion de boîtier (18) en forme de fiche mâle et l'autre module de soupape est réalisé au niveau de cette portion de boîtier (18) en forme de prise femelle.
